Europäisches Patentamt

(19) European Patent Office

Office européen des brevets

(11) **EP 0 950 208 B1**

(12) **EUROPÄISCHE PATENTSCHRIFT**

(45) Veröffentlichungstag und Bekanntmachung des Hinweises auf die Patenterteilung:
**03.07.2002 Patentblatt 2002/27**

(21) Anmeldenummer: **97953673.7**

(22) Anmeldetag: **23.12.1997**

(51) Int Cl.[7]: **G02B 26/10**

(86) Internationale Anmeldenummer:
**PCT/DE97/03014**

(87) Internationale Veröffentlichungsnummer:
**WO 98/28640 (02.07.1998 Gazette 1998/26)**

(54) **OPTISCHE ANORDNUNG ZUM SCANNEN EINES STRAHLS IN ZWEI IM WESENTLICHEN SENKRECHT ZUEINANDER LIEGENDEN ACHSEN**

OPTICAL DEVICE FOR SCANNING A BEAM IN TWO AXES THAT ARE SUBSTANTIALLY PERPENDICULAR TO EACH OTHER

DISPOSITIF OPTIQUE POUR BALAYAGE D'UN FAISCEAU SELON EN DEUX AXES SENSIBLEMENT PERPENDICULAIRES ENTRE EUX

(84) Benannte Vertragsstaaten:
**CH DE FR GB LI**

(30) Priorität: **24.12.1996 DE 19654210**

(43) Veröffentlichungstag der Anmeldung:
**20.10.1999 Patentblatt 1999/42**

(73) Patentinhaber: **Leica Microsystems Heidelberg GmbH**
**68165 Mannheim (DE)**

(72) Erfinder:
• **ENGELHARDT, Johann**
**D-76669 Bad Schönborn (DE)**
• **ULRICH, Heinrich**
**D-69121 Heidelberg (DE)**

(74) Vertreter: **Naumann, Ulrich, Dr.-Ing. et al**
**Patentanwälte,**
**Ullrich & Naumann,**
**Luisenstrasse 14**
**69115 Heidelberg (DE)**

(56) Entgegenhaltungen:
**US-A- 4 874 215** **US-A- 5 225 923**

**Beschreibung**

Die Erfindung betrifft eine optische Anordnung zum Ablenken eines Strahls in zwei im wesentlichen senkrecht zueinander liegenden Richtungen, insbesondere zur Anwendung bei konfokalen Laserscanmikroskopen, mit zwei mittels jeweils eines Antriebs um senkrecht zueinander liegende Achsen (x- Achse und y-Achse) drehbaren Spiegeln.

Grundsätzlich handelt es sich hier um eine Anordnung zum Ablenken eines Strahls in zwei im wesentlichen senkrechten Richtungen, wobei es hier darauf ankommt, den Lichtstrahl in beiden Achsen um die Pupille des Objektivs oder einer dazu konjugierten Ebene zu drehen.

Aus der Praxis sind bereits unterschiedlichste Ausführungsformen eines x-y-Scanners bekannt. Aus dem Paper von J. Montagu: "Two-axis beam steering system, TABS", Proceedings Reprint, SPIE - The International Society for Optical Engineering, Vol. 1920, 1993, Seiten 162-173 (reprinted from Smart Structures and Materials 1993: "Active and Adaptive Optical Components and Systems II", 1-4 February 1993, Albuquerque, New Mexico), sind unterschiedliche Scanner bekannt.

Bei dem Einspiegel-Scanner ist ein einziger, um eine Achse drehender Spiegel vorgesehen, wobei die Drehachse des Spiegels nicht der optischen Achse entspricht. Einspiegel-Scanner umfassen in der Regel einen kardanisch aufgehängten Spiegel zum Scannen sowohl in x- als auch in y-Richtung. Aufgrund des hier lediglich singulären Spiegels werden zwar Lichtverluste durch mehrere Spiegel minimiert, dafür muß jedoch das x-Galvanometer stets mitbewegt werden, d.h. dessen Masse muß beschleunigt und abgebremst werden. Dies limitiert die Bildrate auf ca. zehn Bilder pro Sekunde, und zwar wegen der ansonsten zu großen Schwingungseinträge in das Mikroskopsystem. Außerdem kann ein resonanter Scanner wegen des dafür notwendigen stehenden Einbaus nicht verwendet werden.

Beim Zweispiegel-Scanner sind zwei unter einem vorgegebenen Winkel zueinander angeordnete Spiegel vorgesehen, die üblicherweise um orthogonal zueinander angeordnete Drehachsen drehen. Eine solche Anordnung ist jedoch nicht zwingend erforderlich. Der einfallende Strahl verläuft auf jeden Fall parallel zu der Drehachse des im Strahlengang letzten Spiegels.

Des weiteren sind sog. "Paddle"-Scanner und "Golf-Club"-Scanner als besondere Ausführungsformen des Zweispiegel-Scanners bekannt. Bei diesen Scannern wird die Drehung des Strahls um einen virtuellen Drehpunkt lediglich näherungsweise erreicht, was grundsätzlich zu Abbildungsfehlern führt.

Gemäß A. F. Slomba: "A laser flying spot scanner for use in automated fluorescence antibody instrumentation", Vol. 6, No. 3, May-June 1972, Seiten 230-234, sind ebenfalls Spiegel-Scanner unter dem Gesichtspunkt der Anwendung in der Fluoreszenzmikroskopie sowie in der Konfokalmikroskopie bekannt. Hierauf sei lediglich ergänzend hingewiesen.

Aus der US 4 874 215 ist für sich gesehen eine Vorrichtung zum Ablenken eines Lichtstrahls in zwei senkrecht zueinander liegenden Richtungen bekannt. Die Vorrichtung weist drei Spiegel auf, die jeweils von einem Galvanometer gedreht werden. Hierbei sind die Drehachsen der beiden ersten Galvanometer parallel zueinander angeordnet. Das zweite der beiden Galvanometer dreht den ihm zugeordneten Spiegel mit einer niedrigen Frequenz. Das erste Galvanometer dreht den ihm zugeordneten Spiegel mit der dreifachen Frequenz des zweiten Galvanometers, wobei die Drehung synchron erfolgen. Somit wird durch die beiden Spiegel der Lichtstrahl lediglich in eine Richtung abgelenkt. Der Spiegel des dritten Galvanometers dreht um eine Achse, die senkrecht zu den Drehachsen der beiden anderen Spiegel ist und lenkt somit den Lichtstrahl in eine zweiten Richtung ab.

Aus der US 5 225 923 ist ein konfokales Mikroskop bekannt, bei dem ein Lichtstrahl ebenfalls mit drei oder vier drehbar angeordneten Spiegeln in zwei senkrecht zueinander stehenden Richtungen ablenkbar ist. Auch bei dieser Vorrichtung ist jedem Spiegel ein Galvanometer zugeordnet, wodurch mit dieser Anordnung eine schnelle Strahlablenkung realisierbar ist.

Die zuvor erörterten bekannten optischen Anordnungen zum Ablenken eines Strahls in zwei im wesentlichen senkrecht zueinander liegenden Richtungen sind in der Praxis aus den unterschiedlichsten Gründen problematisch. Im Vordergrund stehen hier sicherlich erhebliche Abbildungsfehler sowie die weiterreichende Problematik dahingehend, daß zumindest einer der Antriebe stets mitbewegt werden muß, was zu einer ganz erheblichen Begrenzung der Bildrate führt. Jedenfalls erreichen die bekannten Zweispiegel-Anordnungen eine Drehung des Strahls um einen virtuellen Drehpunkt nur annäherungsweise, wodurch bei diesen Scannern ganz erhebliche Abbildungsfehler entstehen.

Der Erfindung liegt daher die Aufgabe zugrunde, eine optische Anordnung zum Ablenken eines Strahls in zwei im wesentlichen senkrecht zueinander liegenden Richtungen anzugeben, wonach gravierende Abbildungsfehler vermieden sind, wonach eine hohe Bildrate für Real-Time-Anwendungen, d.h. für übliche Videogeschwindigkeit, möglich ist und wonach sich das Bild insbesondere bei der Konfokalmikroskopie leicht einstellen bzw. zentrieren läßt.

Die erfindungsgemäße Anordnung zum Ablenken eines Strahls in zwei im wesentlichen senkrecht zueinander liegenden Richtungen löst die voranstehende Aufgabe durch die Merkmale des Patentanspruches 1. Danach ist die eingangs genannte optische Anordnung - Zweispiegel-Scanner - dadurch ergänzt, daß einem der beiden Spiegel ein weiterer Spiegel in einer vorgegebenen Winkelposition drehfest zugeordnet ist, so daß die einander zugeordneten Spiegel - erster und zweiter Spiegel - gemeinsam um die y-Achse drehen und dabei den Strahl um einen Drehpunkt drehen, der auf der Drehachse (x-Achse) des alleine drehenden dritten Spiegels liegt.

Erfindungsgemäß werden durch den dritten Spiegel weitere Lichtverluste - aufgrund von unvermeidbaren Spiegelmängeln - in Kauf genommen, wobei die Anordnung der drei Spiegel wie beim kardanisch aufgehängten Scanspiegel bewirkt, daß der Strahldrehpunkt in den beiden Scanrichtungen x und y in einem Punkt zusammenfällt. Wäre dies nicht der Fall, entstünden im Scanvorgang nicht korrigierbare Fehler und Strahlvignettierungen, da dann nämlich kein telezentrischer Strahlengang mehr vorläge. Die hier beanspruchte Anordnung erzeugt eine geringe y-abhängige relative Zeilenverschiebung von:

$$\frac{\Delta x}{y} = \frac{\sin{^\beta\!/_2}}{\tan\gamma}$$

mit dem y-Scanwinkel $\beta$ und dem Strahlwinkel $\gamma$ zwischen der Rotationsachse des y-Scanners und dem Strahl, der auf den x-Scanspiegel fällt.

Die Zeilenverschiebung ist bei einem typischen Scanwinkel $\beta$ von 7° kleiner als 2% der Bildbreite und somit für viele Anwendungen vernachlässigbar. Falls notwendig, kann sie jedoch leicht durch einen geeigneten y-abhängigen Offset auf dem x-Antrieb kompensiert werden. Zu beachten ist in besonderen Fällen auch, daß die Polarisation am oberen und unteren Rand des Bildes um wenige Grad gedreht ist. Der Nachteil, daß hier drei Spiegel anstatt ein Spiegel z.B. bei kardanischer Aufhängung verwendet werden, wird bei der Anforderung hoher Scanraten leicht ausgeglichen, und zwar durch die wesentlich kleinere Masse, die hier beschleunigt werden muß. Jedenfalls lassen sich hier auch Antriebe mit einer hohen Frequenz verwenden, da diese bei der erfindungsgemäßen Anordnung statisch montiert sind.

In erfindungsgemäßer Weise ist jedenfalls wesentlich, daß eine Minimierung von Abbildungsfehlern auf Kosten von Lichtverlusten stattfindet, die jedoch bei zahlreichen Anwendungen zumindest in gewissem Rahmen von einer untergeordneten Bedeutung sind.

Hinsichtlich einer konkreten Ausgestaltung der hier beanspruchten optischen Anordnung sind die beiden gemeinsam drehenden Spiegel - erster und zweiter Spiegel - dem alleine drehenden dritten Spiegel im Strahlengang vorgeschaltet bzw. vorgeordnet. Der einfallende Strahl fällt auf den ersten der beiden einander zugeordneten Spiegel, und zwar in ganz besonders vorteilhafter Weise in deren gemeinsamer Drehachse (y-Achse).

Hinsichtlich einer kompakten Bauweise der optischen Anordnung ist es von Vorteil, wenn die beiden einander zugeordneten Spiegel auf einer drehbaren Aufnahme angeordnet sind, wobei die Winkelposition der beiden Spiegel zueinander und deren Abstand unveränderlich ist. Die gesamte Aufnahme ist um die optische Achse (y-Achse) des einfallenden Strahls drehbar.

Ebenso ist es möglich, die beiden einander zugeordneten Spiegel - statt auf einer einfachen Aufnahme - in einem Gehäuse anzuordnen, wobei insoweit ein Schutz der Spiegel gegeben wäre. Entsprechend der Ausgestaltung der zuvor erörterten Aufnahme würde das Gehäuse um die optische Achse (y-Achse) des einfallenden Strahls drehen.

Das Gehäuse weist des weiteren eine Eintrittsöffnung für den einfallenden Strahl auf, wobei der Strahl in der Drehachse des Gehäuses auf den ersten der beiden einander zugeordneten Spiegel trifft bzw. fällt und zum zweiten Spiegel reflektiert wird. Der dritte Spiegel könnte außerhalb des Gehäuses drehbar angeordnet sein. Im Rahmen einer ganz besonders vorteilhaften Ausgestaltung weist das Gehäuse jedoch eine Ausnehmung auf und ist das Gehäuse dieser Ausnehmung gegenüber zumindest teilweise offen. Der alleine drehende dritte Spiegel (x-Drehachse) ist vom Gehäuse unabhängig drehbar und dabei innerhalb der Ausnehmung des Gehäuses angeordnet.

Entsprechend der Anordnung der ersten beiden innerhalb des Gehäuses starr angeordneten Spiegel wird der Strahl vom zweiten Spiegel zur Ausnehmung des Gehäuses hin reflektiert, wo er auf den dort angeordneten, alleine drehenden dritten Spiegel fällt. Von hier aus wird der Strahl nach außerhalb des Gehäuses oder wieder in das Gehäuse zurück und durch eine besondere Austrittsöffnung aus dem Gehäuse herausgeführt. Gemäß der voranstehend geschilderten Ausführung ist eine kompakte Bauweise innerhalb eines Gehäuses realisiert, wobei der dritte Spiegel im Bereich der Ausnehmung des Gehäuses quasi innerhalb des Gehäuses frei drehbar angeordnet ist. Letztendlich ist der dritte Spiegel durch das Gehäuse zumindest teilweise abgedeckt bzw. überdeckt und damit zumindest weitgehend geschützt.

Im Rahmen einer weiteren Ausführungsform könnte den beiden einander in der vorgegebenen Winkelposition drehfest zugeordneten, gemeinsam um die optische Achse (y-Achse) drehenden Spiegeln - erster und zweiter Spiegel - und dem alleine drehenden Spiegel - dritter Spiegel - ein weiteres Spiegelpaar nachgeordnet sein, wobei diesem weiteren Spiegelpaar zwei einander in einer vorgegebenen Winkelposition drehfest zugeordnete Spiegel - vierter und fünfter Spiegel - zugeordnet sind. Letztendlich wäre der vierte und der fünfte Spiegel ähnlich dem ersten und zweiten Spiegel fest einander zugeordnet, und zwar in einer vorgegebenen Winkelposition der jeweiligen Spiegelflächen.

Die beiden weiteren Spiegel könnten auf einer um die optische Achse (y-Achse) drehenden Aufnahme montiert sein, wie dies bei den ersten beiden Spiegeln der Fall sein kann. Der alleine um die x-Achse drehbare dritte Spiegel könnte dabei beweglich mit der zweiten Aufnahme verbunden sein, wobei dieser dritte Spiegel unabhängig von der zweiten Aufnahme um die x-Achse drehen kann, jedoch gemeinsam mit der zweiten Aufnahme um die y-Achse schwenkbar wäre.

Im Rahmen einer besonders bevorzugten Ausgestaltung wäre die erste Aufnahme auf der zweiten Aufnahme angeordnet und wäre mit dieser um die optische Achse drehbar verbunden, wobei sich die von der zweiten Aufnahme unabhängige Drehbarkeit der ersten Aufnahme ebenfalls auf die y-Achse bzw. optische Achse bezieht.

Wie auch bereits bei der zuvor erörterten Dreispiegelanordnung können im Rahmen einer besonders kompakten Ausgestaltung die beiden einander zugeordneten weiteren Spiegel - vierter und fünfter Spiegel - in einem um die optische Achse (y-Achse) drehbaren zweiten Gehäuse angeordnet sein, wobei der alleine um die x-Achse drehbare dritte Spiegel beweglich in dem zweiten Gehäuse angeordnet ist. Das erste Gehäuse könnte wiederum in dem zweiten Gehäuse angeordnet und mit diesem um die optische Achse (y-Achse) drehbar verbunden sein. Die unabhängige Drehbarkeit des ersten Gehäuses bezieht sich jedenfalls ebenfalls auf die optische Achse bzw. y-Achse.

Bereits zuvor wurde mehrfach angedeutet, daß die Aufnahme bzw. das Gehäuse in der optischen Achse (y-Achse) des einfallenden Strahls dreht. Ebenso ist es möglich, daß der ausfallende Strahl in der optischen Achse des einfallenden Strahls liegt. Es wäre jedoch auch denkbar, den ausfallenden Strahl unter einem beliebigen Winkel zur optischen Achse des einfallenden Strahls auszurichten, so beispielsweise den ausfallenden Strahl in etwa orthogonal zum einfallenden Strahl zu führen.

Die Spiegel der zuvor erörterten Anordnung könnten im Rahmen einer besonders einfachen Ausgestaltung planar ausgebildete Spiegelflächen aufweisen. Ebenso wäre es jedoch auch denkbar, die Spiegel mit einer zumindest geringförmig gewölbten Spiegelfläche auszustatten, wobei die Wölbung der Spiegelfläche zur Abbildung bzw. Korrektur von Abbildungsfehlern herangezogen werden kann.

Ein ganz besonderer Vorteil der erfindungsgemäßen Vorrichtung ist darin zu sehen, daß sich die Antriebe für die Drehbewegung der Spiegel bzw. der Aufnahmen oder der Gehäuse von diesen Bauteilen zumindest in konstruktiver bzw. körperlicher Hinsicht entkoppeln lassen. In vorteilhafter Weise sind nämlich die Antriebe ortsfest angeordnet, müssen demnach in keiner Weise mitbewegt werden. Insoweit lassen sich als Antriebe problemlos Galvanometer - insbesondere auch resonante Galvanometer mit hohen Frequenzen - verwenden, ohne zu große Schwingungseinträge in das Mikroskopsystem hervorzurufen. Letztendlich lassen sich insoweit große Bildraten erzeugen, die eine Echtzeitverarbeitung ermöglichen.

Im Rahmen der Verwendung von Galvanometern als Antriebe ist es von weiterem Vorteil, wenn die um die y-Achse drehenden Spiegel von einem Galvanometer und der um die x-Achse drehende Spiegel von einem resonanten Galvanometer mit hoher Frequenz drehangetrieben sind. Ebenso ist es jedoch auch denkbar, als Antrieb einen Stepper-Motor bzw. Schrittmotor vorzusehen.

Die Drehbarkeit der Spiegel kann beliebig ausgeführt werden, wobei es hinreichend ist, wenn die Spiegel in einem Bereich bis etwa 60° drehbar sind. Eine weiterreichende Drehbarkeit ist entsprechend der konkret gewählten Anordnung meist nicht erforderlich.

Wie bereits eingangs ausgeführt, treten auch bei der hier vorgeschlagenen Anordnung hyperbolische Verzeichnungen bei der Abbildung auf. In vorteilhafter Weise sind diese hyperbolischen Verzeichnungen in Abhängigkeit von der y-Position korrigierbar. Im Konkreten könnte die hyperbolische Verzeichnung durch einen geeigneten y-abhängigen Offset auf den x-Antrieb kompensiert werden, wobei hier zu beachten ist, daß die Polarisation am oberen und unteren Rand des Bildes um wenige Grad gedreht ist.

Die hyperbolische Verzeichnung könnte auch erst bei der Auswertung des x-Positionssignals berücksichtigt und kompensiert werden. Eine solche Berücksichtigung und Kompensation der hyperbolischen Verzeichnung könnte beispielsweise nach der Bilddigitalisierung erfolgen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung von Ausführungsbeispielen der Erfindung anhand der Zeichnung zu verweisen. In Verbindung mit der Erläuterung der bevorzugten Ausführungsbeispiele der Erfindung werden auch im allgemeinen bevorzugte Ausgestaltungen und Weiterbildungen der Lehre erläutert. In der Zeichnung zeigt

Fig. 1     in einer schematischen Darstellung ein erstes Ausführungsbeispiel einer erfindungsgemäßen optischen Anordnung zum Ablenken eines Strahls in zwei im wesentlichen senkrecht zueinander liegenden Richtungen, wobei hier insgesamt drei Spiegel vorgesehen sind;

Fig. 2     die Anordnung aus Fig. 1, wobei die Spiegel in einem Gehäuse angeordnet sind;

Fig. 3     die Anordnung aus Fig. 2 in einer den Strahlengang und die Drehbewegung der Spiegel schematisch darstellenden Ansicht;

Fig. 4     die mit der Vorrichtung aus Fig. 3 realisierbare Abbildung mit Abbildungsfehlern;

Fig. 5     ein weiteres Ausführungsbeispiel einer erfindungsgemäßen Anordnung mit insgesamt fünf Spiegeln, ähnlich der Darstellung aus Fig. 1 und

Fig. 6     ein weiteres Ausführungsbeispiel, welches der Fig. 1 ähnlich ist.

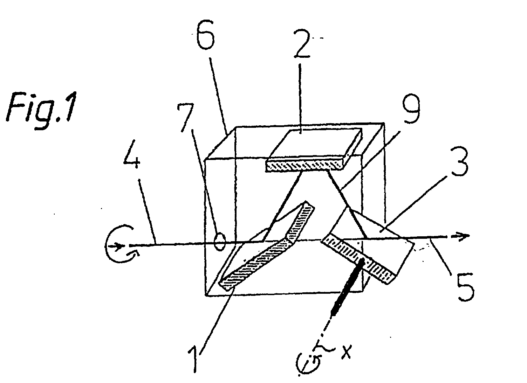

Fig. 1 zeigt eine optische Anordnung zum Ablenken eines Strahls in zwei im wesentlichen senkrecht zueinander liegenden Richtungen, wobei sich diese Anordnung insbesondere bei konfokalen Laserscanmikroskopen anwenden läßt.

Die Anordnung umfaßt drei Spiegel 1 bis 3, von denen zwei Spiegel 1 und 2 mittels eines ersten Antriebs um eine erste Achse, die y-Achse, und ein Spiegel (3) mittels eines zweiten Antriebs um eine zweite Achse, die x-Achse, die auf der ersten Achse (y-Achse) senkrecht steht, drehbar ist.

In erfindungsgemäßer Weise ist dem Spiegel 1 ein weiterer Spiegel 2 in einer vorgegebenen Winkelposition drehfest zugeordnet, so daß die einander zugeordneten Spiegel 1, 2 - erster und zweiter Spiegel - gemeinsam um die y-Achse 5 drehen und dabei den Strahl um einen Drehpunkt drehen, der auf der Drehachse (x-Achse) des alleine drehenden dritten Spiegels 3 liegt.

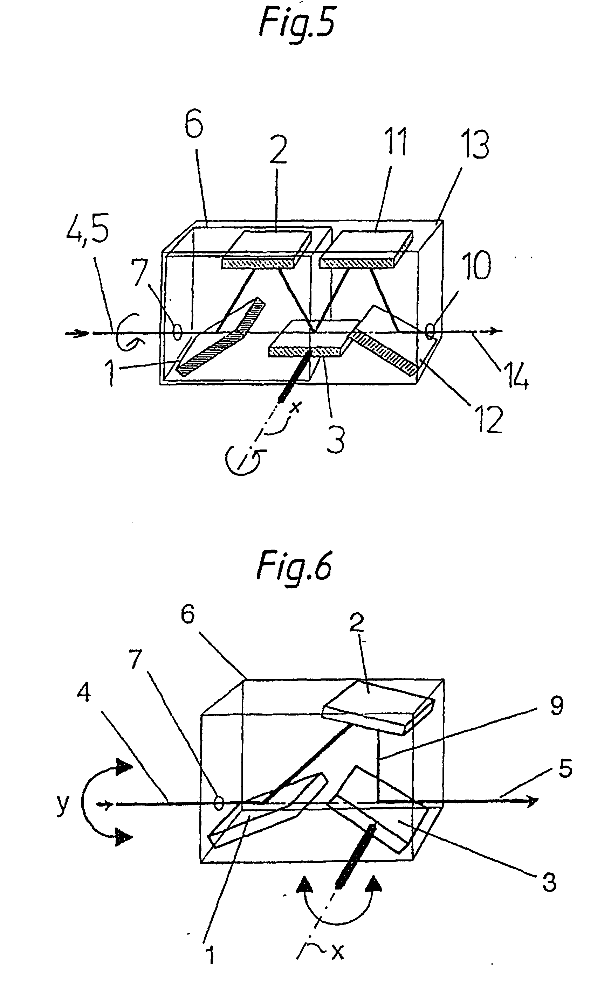

Die beiden gemeinsam drehenden Spiegel 1, 2 - erster und zweiter Spiegel - sind dem alleine drehenden dritten Spiegel 3 im Strahlengang vorgeschaltet, wobei der einfallende Strahl 4 auf den ersten Spiegel 1 der beiden einander zugeordneten Spiegel 1, 2 in deren gemeinsamer Drehachse 5 fällt. Wie aus Fig. 1 ersichtlich, verlaufen die beiden Teilstrahlengänge zwischen den Spiegeln 1 und 2 einerseits und den Spiegeln 2 und 3 - also Strahl 9 - andererseits etwa symmetrisch bezüglich des - gedachten - Einfallslots auf dem Spiegel 2. Wie Fig. 6 zeigt, ist es indes auch möglich, den ortsfest im Gehäuse 6 angebrachten Spiegel 2 derart zu positionieren, daß der Strahl 9 senkrecht zur y-Achse 4 bzw. 5 verläuft.

Bei dem in den Fig. 1, 2 und 3 gezeigten Ausführungsbeispiel ist angedeutet, daß die beiden einander zugeordneten Spiegel 1, 2 in einem Gehäuse 6 angeordnet sind. Das Gehäuse 6 dreht um die optische Achse 5 (y-Achse) des einfallenden Strahls 4.

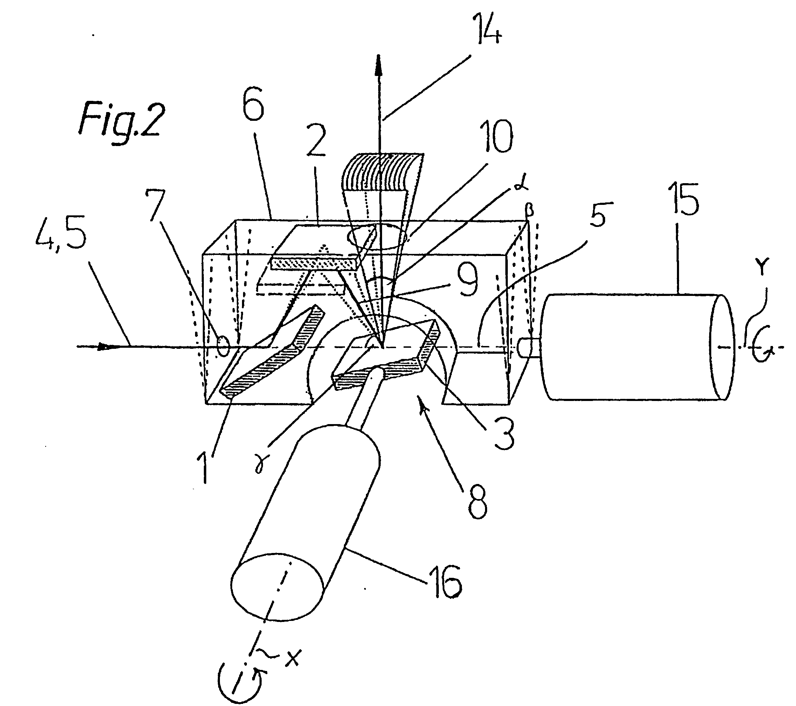

Die Fig. 1 und 2 zeigen des weiteren, daß das Gehäuse 6 eine Eintrittsöffnung 7 für den einfallenden Strahl 4 aufweist, wobei der Strahl 4 in der Drehachse 5 des Gehäuses 6 auf den ersten Spiegel 1 der beiden einander zugeordneten Spiegel 1, 2 trifft und vom ersten Spiegel 1 aus zum zweiten Spiegel 2 reflektiert wird.

Gemäß der Darstellung in Fig. 2 weist das Gehäuse 6 eine Ausnehmung 8 auf und ist das Gehäuse 6 dieser Ausnehmung 8 gegenüber offen. Der alleine drehende dritte Spiegel 3 ist vom Gehäuse 6 unabhängig um die x-Achse drehbar in der Ausnehmung 8 angeordnet.

Der auf den alleine drehenden Spiegel 3 fallende Strahl 9 wird von dem dritten Spiegel 3 zurück in das Gehäuse 6 und durch eine Austrittsöffnung 10 aus dem Gehäuse 6 heraus zur Abbildung reflektiert.

Unter Bezugnahme auf Fig. 1 sei noch einmal angemerkt, daß die Spiegel 1 und 2 fest mit dem Gehäuse 6 verbunden sind, und zwar in einer vorgegebenen Winkelposition zueinander. Das Gehäuse 6 selbst ist um die optische Achse 5 bzw. y-Achse drehbar. Der dritte Spiegel 3 ist um die x-Achse drehbar, die orthogonal zur y-Achse 5 ausgebildet ist.

Eine Drehung des Spiegels 3 um die x-Achse rastert demnach das Bild in x-Richtung ab. Eine Drehung des Gehäuses 6 um die y-Achse 5 rastert das Bild in y-Richtung ab. Eine gleichzeitige Drehung des Gehäuses 6 und des Spiegels 3 um die y-Achse 5 läßt das Bild rotieren. Dabei entstehende y-abhängige x-Verschiebungen lassen sich durch einen y-abhängigen Offset korrigieren. Polarisationsdrehungen lassen sich durch y-abhängige Drehungen des Scanners korrigieren.

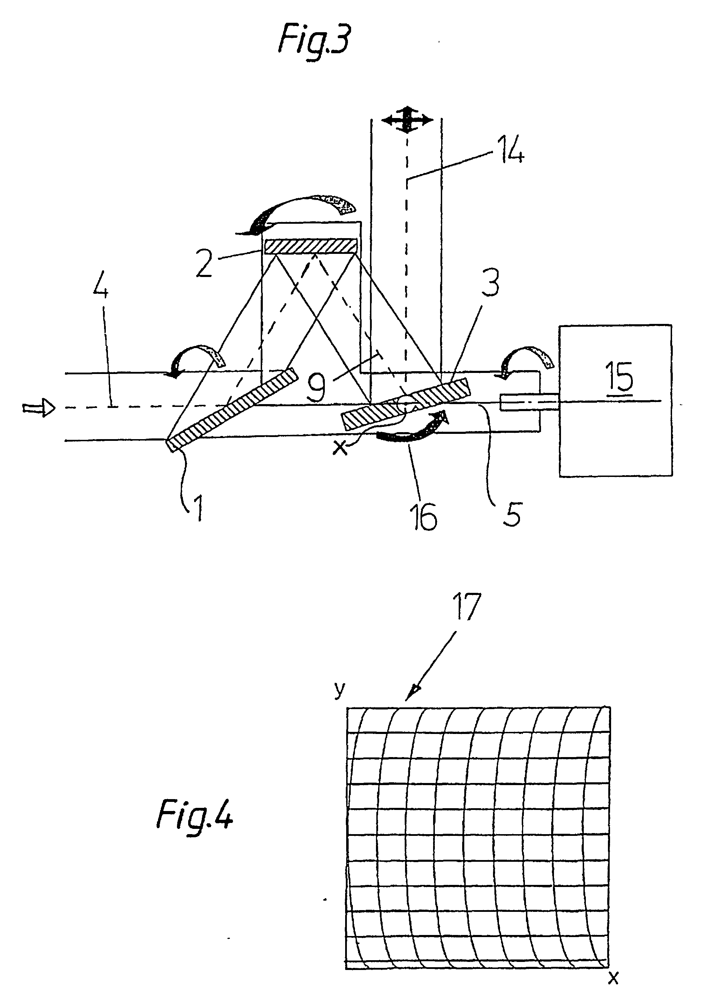

Abbildungsfehler bzw. hyperbolische Verzeichnungen 17 sind in Fig. 4 dargestellt, wie sie sich nämlich bei Anwendung einer Anordnung gemäß der Fig. 1 bis 3 ergeben. Hinsichtlich sonstiger Korrekturmöglichkeiten wird zur Vermeidung von Wiederholungen auf den allgemeinen Teil der Beschreibung verwiesen.

Fig. 5 zeigt ein weiteres Ausführungsbeispiel einer erfindungsgemäßen optischen Anordnung zum Ablenken eines Strahls in zwei im wesentlichen senkrecht zueinander liegenden Richtungen, wobei den beiden einander in einer vorgegebenen Winkelposition drehfest zugeordneten, gemeinsam um die y-Achse 5 drehenden Spiegeln 1, 2 - erster und zweiter Spiegel - und dem alleine drehenden Spiegel 3 - dritter Spiegel - ein weiteres Spiegelpaar nachgeordnet ist. Dieses weitere Spiegelpaar umfaßt zwei einander in einer vorgegebenen Winkelposition drehfest zugeordnete Spiegel 11, 12, nämlich einen vierten und einen fünften Spiegel.

Die beiden weiteren Spiegel 11, 12 sind in eine um die y-Achse 5 drehbaren zweiten Gehäuse 13 angeordnet, wobei der alleine um die x-Achse drehbare dritte Spiegel 3 beweglich in dem zweiten Gehäuse 13 angeordnet ist. Fig. 5 zeigt des weiteren andeutungsweise, daß das erste Gehäuse 6 in dem zweiten Gehäuse 13 angeordnet und mit diesem um die y-Achse 5 drehbar verbunden ist. Der ausfallende Strahl 14 liegt in der y-Achse 5 des einfallenden Strahls 4, wobei ein beliebiger Winkel des ausfallenden Strahls zur optischen Achse je nach Anforderung realisierbar ist.

Unter Bezugnahme auf Fig. 5 sei noch einmal angemerkt, daß die Spiegel 1 und 2 fest mit dem Gehäuse 6 verbunden sind, und zwar unter einer vorgegebenen Winkelstellung zueinander. Die Spiegel 11, 12 sind fest mit dem zweiten Gehäuse 13 verbunden. Der um die x-Achse drehbare dritte Spiegel 3 ist um die x-Achse drehbar mit dem zweiten Gehäuse 13 verbunden. Das erste Gehäuse 6 ist in dem zweiten Gehäuse 13 um die y-Achse 5 beweglich angeordnet, wobei das Gehäuse 6 mit dem Gehäuse 13 verbunden ist. Das zweite Gehäuse 13 ist um die y-Achse 5 drehbar, wobei eine Drehung des Spiegels 3 um die x-Achse senkrecht zur y-Achse 5 eine Ablenkung in x-Richtung vornimmt.

Eine Drehung des ersten Gehäuses 6 um die y-Achse 5 führt zu einer Ablenkung in y-Richtung. Eine Drehung des zweiten Gehäuses 13 um die y-Achse 5 rotiert das Bild in der Bildmitte. Eine Verkleinerung des Scanwinkels in x- und y-Richtung zoomt das Bild.

Die Spiegelflächen der hier verwendeten Spiegel 1, 2, 11 und 12 sind planar ausgebildet. Hinsichtlich einer gewölbten Ausbildungsmöglichkeit und der damit verbundenen etwaigen Vorteile wird auf den allgemeinen Teil der Beschreibung verwiesen.

Als Antriebe sind hier Galvanometer vorgesehen, wobei es sich bei dem Antrieb um die y-Achse um ein Galvanometer 15 und bei dem Antrieb um die x-Achse um ein resonantes Galvanometer 16 handelt. Andere Antriebe sind ebenfalls einsetzbar.

Abschließend sei ganz besonders hervorgehoben, daß die voranstehend erörterten Ausführungsbeispiele zur Verdeutlichung der beanspruchten Lehre dienen, diese jedoch nicht auf die Ausführungsbeispiele einschränken.

**Bezugszeichenliste**

1       erster Spiegel
2       zweiter Spiegel
3       dritter Spiegel (um x-Achse drehbar)
4       einfallender Strahl
5       Drehachse, optische Achse (y-Achse)
6       erstes Gehäuse
7       Eintrittsöffnung in das Gehäuse (6)
8       Ausnehmung im Gehäuse (6)
9       Strahl, auf den dritten Spiegel (3) fallend
10      Austrittsöffnung des Gehäuses (6)
11      vierter Spiegel
12      fünfter Spiegel
13      zweites Gehäuse
14      ausfallender Strahl (aus dem Gehäuse (13))
15      Galvanometer (mit y-Achse als Drehachse)
16      resonantes Galvanometer (mit x-Achse als Drehachse)
17      hyperbolische Verzeichnung
x       x-Achse
α       Scanwinkel um x-Achse
β       Scanwinkel um y-Achse

**Patentansprüche**

1.  Optische Anordnung zum Ablenken eines Strahls in zwei im wesentlichen senkrecht zueinander liegenden Richtungen, insbesondere zur Anwendung bei konfokalen Laserscanmikroskopen, wobei drei Spiegel (1, 2, 3) vorgesehen sind, **dadurch gekennzeichnet, daß** von den Spiegeln der erste und der zweite Spiegel (1, 2) mittels eines ersten Antriebs um eine erste Achse (y-Achse) und ein dritter Spiegel (3) mittels eines zweiten Antriebs um eine zweite Achse (x-Achse), die auf der ersten Achse (y-Achse) senkrecht steht, drehbar sind, wobei der Schnittwinkel zwischen der Spiegelfläche des ersten Spiegels und der ersten Achse (y-Achse) einen Winkel von ungleich 0 Grad aufweist, wobei der erste und der zweite Spiegel (1, 2) einander in einer vorgegebenen Winkelposition drehfest zugeordnet sind, so daß sie gemeinsam um die y-Achse drehen und dabei den Strahl (4) um einen Drehpunkt ablenken, der auf der Drehachse (x-Achse) des alleine drehenden dritten Spiegels (3) liegt.

2.  Anordnung nach Anspruch 1, **dadurch gekennzeichnet, daß** die beiden gemeinsam drehenden Spiegel (1, 2) - erster und zweiter Spiegel - dem alleine drehenden dritten Spiegel (3) im Strahlengang (4, 9) vorgeschaltet sind.

3.  Anordnung nach Anspruch 2, **dadurch gekennzeichnet, daß** der einfallende Strahl (4) auf den ersten der beiden einander zugeordneten Spiegel (1) in deren gemeinsame Drehachse (5) - y-Achse - fällt.

4.  Anordnung nach einem der Ansprüche 1 bis 3, **dadurch gekennzeichnet, daß** die beiden einander zugeordneten Spiegel (1, 2) auf einer drehbaren Aufnahme angeordnet sind.

5.  Anordnung nach Anspruch 4, **dadurch gekennzeichnet, daß** die Aufnahme um die optische Achse (5) - y-Achse - des einfallenden Strahls (4) dreht.

6.  Anordnung nach einem der Ansprüche 1 bis 5, **dadurch gekennzeichnet, daß** die beiden einander zugeordneten Spiegel (1, 2) in einem Gehäuse (6) angeordnet sind.

7.  Anordnung nach einem der Ansprüche 1 bis 6, **dadurch gekennzeichnet, daß** der zweite Spiegel (2) in dem Gehäuse (6) derart ortsfest positioniert ist, daß der vom zweite Spiegel (2) ausgehende Strahl (9) senkrecht zur y-Achse (4 bzw. 5) und zur x-Achse hin gerichtet ist.

8.  Anordnung nach Anspruch 6 oder 7, **dadurch gekennzeichnet, daß** das Gehäuse (6) um die optische Achse (5) - y-Achse - des einfallenden Strahls (4) dreht.

9.  Anordnung nach einem der Ansprüche 6 bis 8, **dadurch gekennzeichnet, daß** das Gehäuse (6) eine Eintrittsöffnung (7) für den einfallenden Strahl (4) aufweist, wobei der Strahl (4) in der Drehachse des Gehäuses (6) auf den ersten der beiden einander zugeordneten Spiegel (1) trifft und zum zweiten Spiegel (2) reflektiert wird.

10. Anordnung nach Anspruch 9, **dadurch gekennzeichnet, daß** das Gehäuse (6) eine Ausnehmung (8) aufweist und dieser gegenüber zumindest teilweise offen ist und daß der alleine drehende dritte Spiegel (3) vom Gehäuse (6) unabhängig drehbar in der Ausnehmung (8) angeordnet ist.

11. Anordnung nach Anspruch 10, **dadurch gekennzeichnet, daß** der auf den alleine drehenden dritten Spiegel (3) fallende Strahl (9) von diesem in das Gehäuse (6) zurück und durch eine Austrittsöffnung (10) aus dem Gehäuse (6) heraus reflektiert wird.

12. Anordnung nach einem der Ansprüche 1 bis 11, **dadurch gekennzeichnet, daß** den beiden einander in einer vorgegebenen Winkelposition drehfest zugeordneten, gemeinsam um die optische Achse (5) drehenden Spiegeln (1, 2) - erster und zweiter Spiegel - und dem alleine drehenden Spiegel (3) - dritter Spiegel - ein weiteres Spiegelpaar nachgeordnet ist und daß dieses weitere Spiegelpaar zwei einander in einer vorgegebenen Winkelposition drehfest zugeordnete Spiegel (11, 12) - vierter und fünfter Spiegel - umfaßt.

13. Anordnung nach Anspruch 12, **dadurch gekennzeichnet, daß** die beiden weiteren Spiegel (11, 12) auf einer um die optische Achse (5) drehenden Aufnahme montiert sind, wobei der alleine um die x-Achse drehbare Spiegel (3) beweglich mit der zweiten Aufnahme verbunden ist.

14. Anordnung nach Anspruch 13, **dadurch gekennzeichnet, daß** die erste Aufnahme auf der zweiten Aufnahme angeordnet und mit dieser um die optische Achse (5) drehbar verbunden ist.

15. Anordnung nach Anspruch 12, **dadurch gekennzeichnet, daß** die beiden einander zugeordneten weiteren Spiegel (11, 12) - vierter und fünfter Spiegel - in einem um die optische Achse (5) - y-Achse - drehbaren zweiten Gehäuse (13) angeordnet sind, wobei der alleine um die x-Achse drehbare dritte Spiegel (3) beweglich in dem zweiten Gehäuse (13) angeordnet ist.

16. Anordnung nach Anspruch 15, **dadurch gekennzeichnet, daß** das erste Gehäuse (6) in dem zweiten Gehäuse (13) angeordnet und mit diesem um die optische Achse (5) drehbar verbunden ist.

17. Anordnung nach einem der Ansprüche 1 bis 16, **dadurch gekennzeichnet, daß** der ausfallende Strahl (14) in der optischen Achse (5) des einfallenden Strahls (4) liegt.

18. Anordnung nach einem der Ansprüche 1 bis 16, **dadurch gekennzeichnet, daß** der ausfallende Strahl (14) unter einem beliebigen Winkel zur optischen Achse (5) des einfallenden Strahls (4) ausgerichtet ist.

19. Anordnung nach einem der Ansprüche 1 bis 18, **dadurch gekennzeichnet, daß** die Spiegel (1, 2, 3, 11, 12) eine planar ausgebildete Spiegelfläche aufweisen.

20. Anordnung nach einem der Ansprüche 1 bis 18, **dadurch gekennzeichnet, daß** die Spiegel (1, 2, 3, 11, 12) eine zumindest geringfügig gewölbte Spiegelfläche aufweisen.

21. Anordnung nach Anspruch 20, **dadurch gekennzeichnet, daß** die Wölbung der Spiegelfläche zur Abbildung herangezogen wird.

22. Anordnung nach einem der Ansprüche 1 bis 21, **dadurch gekennzeichnet, daß** die Antriebe ortsfest angeordnet sind.

23. Anordnung nach einem der Ansprüche 1 bis 22, **dadurch gekennzeichnet, daß** als Antriebe Galvanometer (15) vorgesehen sind.

24. Anordnung nach Anspruch 23, **dadurch gekennzeichnet, daß** es sich bei den Galvanometern um resonante Galvanometer (16) handelt.

25. Anordnung nach Anspruch 23 oder 24, **dadurch gekennzeichnet, daß** die um die y-Achse drehenden Spiegel (1, 2, 11, 12) von einem Galvanometer (15) und der um die x-Achse drehende dritte Spiegel (3) von einem resonanten Galvanometer (16) drehangetrieben sind.

26. Anordnung nach einem der Ansprüche 1 bis 22, **dadurch gekennzeichnet, daß** als Antrieb ein Stepper-Motor vorgesehen ist.

27. Anordnung nach einem der Ansprüche 1 bis 26, **dadurch gekennzeichnet, daß** die Spiegel (1, 2, 3, 11, 12) unter verschiedenen Winkeln drehbar sind, vorzugsweise im Bereich bis etwa 60°.

28. Anordnung nach einem der Ansprüche 1 bis 27, **dadurch gekennzeichnet, daß** Mittel zum Korrigieren einer hyperbolischen Verzeichnung (17) in Abhängigkeit von der y-Position vorgesehen sind.

29. Anordnung nach Anspruch 28, **dadurch gekennzeichnet, daß** die hyperbolische Verzeichnung (17) durch einen geeigneten y-abhängigen Offset auf dem x-Antrieb kompensierbar ist.

30. Anordnung nach einem der Ansprüche 1 bis 29, **dadurch gekennzeichnet, daß** die hyperbolische Verzeichnung (17) bei der Auswertung des x-Positionssignals berücksichtigt und kompensiert wird.

31. Anordnung nach einem der Ansprüche 1 bis 30, **dadurch gekennzeichnet, daß** die hyperbolische Verzeichnung (17) nach der Bilddigitalisierung berücksichtigt und kompensiert wird.

32. Anordnung nach einem der Ansprüche 1 bis 31, **dadurch gekennzeichnet, daß** die zweite Achse (x-Achse) im wesentlichen in der Ebene des dritten Spiegels liegt.

33. Anordnung nach einem der Ansprüche 1 bis 32, **dadurch gekennzeichnet, daß** die Spiegel derart angeordnet sind, daß der Drehpunkt des Strahls im wesentlichen der Schnittpunkt der beiden Achsen (x-Achse und y-Achse) ist, der im wesentlichen auf der Fläche des dritten Spiegels liegt.

**Claims**

1. Optical arrangement for deflecting a beam in two directions lying substantially perpendicular to one another, especially for use in confocal laser scanning microscopes, wherein three mirrors (1, 2, 3) are provided, **characterised in that**, of the mirrors, the first and a the second mirror (1, 2) are rotatable by means of a first drive means about a first axis (y-axis) and a third mirror (3) is rotatable by means of a second drive means about a second axis (x-axis) that is perpendicular to the first axis (y-axis), the angle of intersection between the reflecting face of the first mirror and the first axis (y-axis) comprising an angle not equal to 0 degrees, the first and the second mirror (1, 2) being non-rotatably associated with one another in a predetermined angular position so that they rotate jointly about the y-axis and in so doing deflect the beam (4) about a centre of rotation that lies on the axis of rotation (x-axis) of the third mirror (3) rotating on its own.

2. Arrangement according to Claim 1, **characterised in that** the two jointly rotating mirrors (1, 2) - the first and second mirror - are arranged in the beam path (4, 9) in front of the third mirror (3) rotating on its own.

3. Arrangement according to Claim 2, **characterised in that** the incident beam (4) falls on the first of the two mirrors (1) associated with one another in their common axis of rotation (5) - y-axis.

4. Arrangement according to any one of Claims 1 to 3, **characterised in that** the two mirrors (1, 2) associated with one another are arranged on a rotatable holder.

5. Arrangement according to Claim 4, **characterised in that** the holder rotates about the optical axis (5) - y-axis - of the incident beam (4).

6. Arrangement according to any one of claims 1 to 5, **characterised in that** the two mirrors (1, 2) associated with one another are arranged in a housing (6).

7. Arrangement according to any one of claims 1 to 6, **characterised in that** the second mirror (2) is positioned fixedly in the housing (6) such that the beam (9) emerging from the second mirror (2) is directed perpendicular to the y-axis (4, 5) and towards the x-axis.

8. Arrangement according to Claim 6 or 7, **characterised in that** the housing (6) rotates about the optical axis (5) - y-axis - of the incident beam (4).

9. Arrangement according to any one of claims 6 to 8, **characterised in that** the housing (6) has an inlet opening (7) for the incident beam (4), the beam (4) impinging in the axis of rotation of the housing (6) on the first of the two mirrors (1) associated with one another and is reflected to the second mirror (2).

10. Arrangement according to Claim 9, **characterised in that** the housing (6) has an aperture (8) and is open at least partly with respect thereto, and the third mirror (3) rotating on its own is arranged rotatably in the aperture (8) independently of the housing (6).

11. Arrangement according to Claim 10, **characterised in that** the beam (9) incident upon the third mirror (3) rotating on its own is reflected by this back into the housing (6) and through an exit opening (10) out of the housing (6).

12. Arrangement according to any one of claims 1 to 11, **characterised in that** a further mirror pair is arranged behind the two mirrors (1, 2) - first and second mirror - associated with one another non-rotatably in a predetermined angular position and rotatable jointly about the optical axis (5) and behind the mirror (3) rotating on its own- third mirror - and this further mirror pair comprises two mirrors (11, 12) - fourth and fifth mirror- associated non-rotatably with one another in a predetermined angular position.

13. Arrangement according to Claim 12, **characterised**

**in that** the two further mirrors (11, 12) are mounted on a holder rotating about the optical axis (5), the mirror (3) rotatable on its own about the x-axis being movably connected to the second holder.

14. Arrangement according to Claim 13, **characterised in that** the first holder is arranged on the second holder and is connected to this so as to rotate about the optical axis (5).

15. Arrangement according to Claim 12, **characterised in that** the two further mirrors (11, 12) - fourth and fifth mirrors - associated with one another are arranged in a second housing (13) rotatable about the optical axis (5) - y-axis -, the third mirror (3) rotatable on its own about the x-axis being movably arranged in the second housing (13).

16. Arrangement according to Claim 15, **characterised in that** the first housing (6) is arranged in the second housing (13) and is connected to this so as to rotate about the optical axis (5).

17. Arrangement according to any one of claims 1 to 16, **characterised in that** the emergent beam (14) lies in the optical axis (5) of the incident beam (4).

18. Arrangement according to any one of claims 1 to 16, **characterised in that** the emergent beam (14) is oriented at any desired angle to the optical axis (5) of the incident beam (4).

19. Arrangement according to any one of claims 1 to 18, **characterised in that** the mirrors (1, 2, 3, 11, 12) have a reflecting face of planar construction.

20. Arrangement according to any one of claims 1 to 18, **characterised in that** the mirrors (1, 2, 3, 11, 12) have a reflecting face that is at least slightly curved.

21. Arrangement according to Claim 20, **characterised in that** the curvature of the reflecting face is used for imaging.

22. Arrangement according to any one of Claims 1 to 21, **characterised in that** the drive means are fixedly arranged.

23. Arrangement according to any one of claims 1 to 22, **characterised in that** galvanometers (15) are provided as drive means.

24. Arrangement according to Claim 23, **characterised in that** the galvanometers are resonant galvanometers (16).

25. Arrangement according to claim 23 or 24, **charac-**

**terised in that** the mirrors (1, 2, 11, 12) rotating about the y-axis are driven in rotation by a galvanometer (15) and the third mirror (3) rotating about the x-axis is driven in rotation by a resonant galvanometer (16).

26. Arrangement according to any one of claims 1 to 22, **characterised in that** a stepper motor is used as drive means.

27. Arrangement according to any one of claims 1 to 26, **characterised in that** the mirrors (1, 2, 3, 11, 12) are rotatable at different angles, preferably in the range up to about 60°.

28. Arrangement according to any one of claims 1 to 27, **characterised in that** means for correcting a hyperbolic distortion (17) in dependence on the y-position are provided.

29. Arrangement according to Claim 28, **characterised in that** the hyperbolic distortion (17) is arranged to be compensated by a suitable y-dependent offset on the x-drive.

30. Arrangement according to any one of claims 1 to 29, **characterised in that** the hyperbolic distortion (17) is taken into account and compensated in the evaluation of the x-position signal.

31. Arrangement according to any one of claims 1 to 30, **characterised in that** the hyperbolic distortion (17) is taken into account and compensated after image digitalisation.

32. Arrangement according to any one of claims 1 to 31, **characterised in that** the second axis (x-axis) lies substantially in the plane of the third mirror.

33. Arrangement according to any one of claims 1 to 32, **characterised in that** the mirrors are arranged so that the centre of rotation of the beam is substantially the point of intersection of the two axes (x-axis and y-axis) that lies substantially on the face of the third mirror.

**Revendications**

1. Disposition optique pour dévier un rayon lumineux dans deux directions se trouvant sensiblement orthogonales entre elles, en particulier pour une utilisation dans des microscopes confocaux à balayage par laser, trois miroirs (1, 2, 3) étant prévus, **caractérisée en ce que**, parmi les miroirs, le premier et le deuxième miroirs (1,2) sont pivotants au moyen d'un premier entraînement autour d'un premier axe (axe y) et un troisième miroir (3) est pivotant au moyen d'un second entraînement autour d'un second axe (axe x) qui se trouve orthogonal au premier axe (axe y), l'angle d'intersection entre la surface réfléchissante du premier miroir et le premier axe (axe y) présentant un angle différent de 0, le premier et le deuxième miroirs (1, 2) étant adjoints l'un à l'autre de manière fixe en pivotement selon une position angulaire prédéfinie de telle manière qu'ils pivotent ensemble autour de l'axe y et de ce fait dévient le rayon lumineux autour d'un point de pivotement qui se trouve sur l'axe de pivotement (axe x) du troisième miroir (3) pivotant seul.

2. Disposition selon la revendication 1, **caractérisée en ce que** les deux miroirs (1, 2) -premier et deuxième miroirs- pivotant ensemble sont intercalés à l'avant, selon la marche des rayons lumineux (4, 9), du troisième miroir (3) pivotant seul.

3. Disposition selon la revendication 2, **caractérisée en ce que** le rayon lumineux incident (4) tombe sur le premier miroir (1) des deux miroirs adjoints l'un à l'autre dans leur axe de pivotement (5) -axe y- commun.

4. Disposition selon l'une des revendications 1 à 3 , **caractérisée en ce que** les deux miroirs (1, 2) adjoints l'un à l'autre sont disposés sur un logement pivotant.

5. Disposition selon la revendication 4, **caractérisée en ce que** le logement pivote autour de l'axe optique (5) -axe y- du rayon lumineux incident (4).

6. Disposition selon l'une des revendications 1 à 5, **caractérisée en ce que** les deux miroirs (1, 2) adjoints l'un à l'autre sont disposés dans un boîtier (6).

7. Disposition selon l'une des revendications 1 à 6, **caractérisée en ce que** le deuxième miroir (2) est positionné de manière fixe dans le boîtier (6) de telle manière que le rayon lumineux (9) provenant du deuxième miroir (2) est dirigé orthogonalement à l'axe y (4 ou respectivement 5) et en direction de l'axe x.

8. Disposition selon la revendication 6 ou 7, **caractérisée en ce que** le boîtier (6) pivote autour de l'axe optique (5) -axe y- du rayon lumineux incident (4).

9. Disposition selon l'une des revendications 6 à 8, **caractérisée en ce que** le boîtier (6) présente une ouverture d'entrée (7) pour le rayon lumineux incident (4), le rayon lumineux (4) dans l'axe de rotation du boîtier (6) tombant sur le premier (1) des deux miroirs adjoints l'un à l'autre et étant réfléchi vers le deuxième miroir (2).

10. Disposition selon la revendication 9, **caractérisée en ce que** le boîtier (6) présente un évidement (8) et est au moins partiellement ouvert par rapport à celui-ci et que le troisième miroir (3) pivotant seul est disposé à pivotement dans l'évidement (8) en étant indépendant du boîtier (6).

11. Disposition selon la revendication 10, **caractérisée en ce que** le rayon lumineux (9) tombant sur le troisième miroir (3) pivotant seul est réfléchi par celui-ci en retour dans le boîtier (6) et hors du boîtier (6) à travers une ouverture de sortie (10).

12. Disposition selon l'une des revendications 1 à 11, **caractérisée en ce qu'**une paire de miroirs supplémentaire est adjointe aux deux miroirs (1, 2) -premier et deuxième miroirs- adjoints l'un à l'autre de manière fixe en pivotement selon une position angulaire prédéfinie, pivotant ensemble autour de l'axe optique (5) et au miroir (3) -troisième miroir- pivotant seul et que cette paire de miroirs supplémentaire comprend deux miroirs (11, 12) - quatrième et cinquième miroirs- adjoints l'un à l'autre de manière fixe en pivotement selon une position angulaire prédéfinie.

13. Disposition selon la revendication 12, **caractérisée en ce que** les deux miroirs (11, 12) supplémentaires sont montés sur un logement pivotant autour de l'axe optique (5), le miroir (3) pivotant seul autour de l'axe x étant relié de manière mobile au second logement.

14. Disposition selon la revendication 13, **caractérisée en ce que** le premier logement est disposé sur le second logement et est relié à celui-ci à pivotement autour de l'axe optique (5).

15. Disposition selon la revendication 12, **caractérisée en ce que** les deux miroirs (11, 12) supplémentaires -quatrième et cinquième miroirs- adjoint l'un à l'autre sont disposés dans un second boîtier (13) pivotant autour de l'axe optique (5) -axe y-, le troisième miroir (3) pivotant seul autour de l'axe x étant disposé de manière mobile dans le second boîtier (13).

16. Disposition selon la revendication 15, **caractérisée en ce que** le premier boîtier (6) est disposé dans le second boîtier (13) et est relié à celui-ci à pivotement autour de l'axe optique (5).

17. Disposition selon l'une des revendications 1 à 16, **caractérisée en ce que** le rayon lumineux émergent (14) se trouve dans l'axe optique (5) du rayon lumineux incident (4).

**18.** Disposition selon l'une des revendications 1 à 16, **caractérisée en ce que** le rayon lumineux émergent (14) est dirigé selon un angle quelconque par rapport à l'axe optique (5) du rayon lumineux incident (4).

**19.** Disposition selon l'une des revendications 1 à 18, **caractérisée en ce que** les miroirs (1, 2, 3, 11, 12) présentent une surface réfléchissante plane.

**20.** Disposition selon l'une des revendications 1 à 18, **caractérisée en ce que** les miroirs (1, 2, 3, 11, 12) présentent une surface réfléchissante au moins légèrement courbe.

**21.** Disposition selon la revendication 20, **caractérisée en ce que** la courbure de la surface réfléchissante est utilisée pour l'image.

**22.** Disposition selon l'une des revendications 1 à 21, **caractérisée en ce que** les entraînements sont disposés de manière fixe.

**23.** Disposition selon l'une des revendications 1 à 22, **caractérisée en ce que** des galvanomètres (15) sont prévus en tant qu'entraînements.

**24.** Disposition selon la revendication 23, **caractérisée en ce qu'**il s'agit de galvanomètres (16) résonants pour les galvanomètres.

**25.** Disposition selon la revendication 23 ou 24, **caractérisée en ce que** les miroirs (1, 2, 11, 12) pivotant autour de l'axe y sont entraînés en pivotement par un galvanomètre (15) et le troisième miroir (3) pivotant autour de l'axe x par un galvanomètre (16) résonant.

**26.** Disposition selon l'une des revendications 1 à 22, **caractérisée en ce qu'**un moteur pas à pas est prévu en tant qu'entraînement.

**27.** Disposition selon l'une des revendications 1 à 26, **caractérisée en ce que** les miroirs (1, 2, 3, 11, 12) sont pivotants sous différents angles, de préférence dans la plage jusqu'à environ 60°.

**28.** Disposition selon l'une des revendications 1 à 27, **caractérisée en ce que** sont prévus des moyens pour corriger une distorsion d'image (17) hyperbolique en dépendance de la position y.

**29.** Disposition selon la revendication 28, **caractérisée en ce que** la distorsion d'image (17) hyperbolique peut être compensée par un décalage dépendant de y approprié sur l'entraînement x.

**30.** Disposition selon l'une des revendications 1 à 29, **caractérisée en ce que** la distorsion d'image (17) hyperbolique est prise en compte et compensée lors de l'exploitation du signal de position x.

**31.** Disposition selon l'une des revendications 1 à 30, **caractérisée en ce que** la distorsion d'image (17) hyperbolique est prise en compte après la numérisation d'image.

**32.** Disposition selon l'une des revendications 1 à 31, **caractérisée en ce que** le second axe (axe x) se trouve sensiblement dans le plan du troisième miroir.

**33.** Disposition selon l'une des revendications 1 à 32, **caractérisée en ce que** les miroirs sont disposés de telle manière que le point de pivotement du rayon lumineux se trouve sensiblement au point d'intersection des deux axes (axe x et axe y) qui se trouve sensiblement sur la surface du troisième miroir.

Fig.1

Fig.2

## Fig.3

## Fig.4

## Fig.5

## Fig.6